# EUROPEAN PATENT SPECIFICATION

(11) **EP 2 083 044 B1**
(45) Date of publication and mention of the grant of the patent: **29.07.2020**
(21) Application number: 09151014.9
(22) Date of filing: 21.01.2009
(51) Int. Cl.: C08K 3/30, C08K 5/00, C08L 27/06, C08K 3/014, C08K 3/16, C08K 5/098, C08K 5/42

(54) **Composition for stabilizing halogen-containing polymers**
Zusammensetzung zur Stabilisierung von halogenhaltigen Polymeren
Composition pour stabiliser des polymères contenant de l'halogène

(30) Priority: 23.01.2008 IT MI20080097
(43) Date of publication of application: 29.07.2009
(73) Proprietor: Reagens S.p.A., 40016 S. Giorgio Di Piano (IT)
(72) Inventor: Berna, Mario, 40137, BOLOGNA (IT); Sarti, Gianfranco, 40016, SAN GIORGIO DI PIANO (IT)
(74) Representative: Cattaneo, Elisabetta

(56) References cited:
- EP-A- 0 273 766
- EP-A- 0 492 803
- WO-A-02/092686
- US-A- 3 258 367
- US-A1- 2004 140 455
- US-A1- 2004 242 739

## Description

### FIELD OF THE INVENTION

The invention concerns a composition for stabilizing halogen-containing polymers, in particular polyvinyl chloride (PVC), and halogenated resins in rigid and plasticized formulations comprising said stabilizing compositions.

The stabilizing compositions of the invention confer on the final halogenated resin an excellent thermal stability during working.

### STATE OF THE ART

Halogen-containing polymers must be subjected to temperatures within a more or less wide range around 190ºC in order to be worked by known processes, such as moulding, calendaring and extrusion.

It is known that halogen-containing polymers, particularly polyvinyl chloride (PVC), tend to degrade at the aforementioned processing temperatures due to the inherent degradation temperature of the halogenated polymer itself, which at said temperatures causes hydrochloric acid release accompanied by formation of double bonds.

Alteration of the polymer as a result of degradation can significantly manifest itself as a deterioration in the mechanical properties of the obtained resin and a darkening in colour up to the burning limit of said resin. It is evident that the higher the required machining temperature, or the longer the machine residence time, the greater will be the risk of alterations.

To overcome this problem, complex mixtures are known for stabilizing polymer behaviour and providing efficient deterioration resistance.

The document EP1406963 describes the use of fluoroalkanesulphonic acids for stabilizing organic plastics containing chlorine. In particular, the use of potassium, sodium and lithium trifluoromethanesulphonic acid salts is described to counteract thermal and photochemical degradation.

Although these acids are efficient, their high costs preclude their constant use in processing halogenated polymers.

International patent application WO02/092686 proposes a heavy-metal-free stabilizer for rigid or semi-rigid PVC, which comprises, as essential components, zeolites or hydrotalcites treated with perchloric acid or metal perchlorates, a metal carboxylate salt, an organic co-stabilizer group and an antioxidant group.

Although on the one hand these compositions enable heavy metal use to be avoided, the zeolites present therein, however, tend to release water which prevents their use as stabilizers in some rigid or semi-rigid PVC applications.

With the aim of increasing thermal stability during processing and increasing light stability of the final resin, the document EP1395630 describes compositions comprising a salt of a halogen-containing oxyacid of formula M(ClO₄)k and an organic or inorganic acid or an organic base, wherein the oxyacid contains less than 10% of crystallites having a size greater than 3 micrometres. In the illustrated embodiment, the composition of EP1395630, comprising sodium perchlorate and calcium hydroxide, proves to be particularly effective in increasing dehydrochlorination time. However, the inventors of the present invention have found that said composition, although producing an increase in stability, is not so satisfactory in maintaining the initial colour, thus occasionally causing the final resin colour to redden. To overcome this colour change, other co-stabilizers have to be added to the composition of EP1395630, with an evident increase in formulation costs.

The document EP0492803 proposes the use of certain potassium or sodium salts of adipic acid in combination with a metal-based stabilizer, specifically an organotin compound, for stabilizing both rigid and plasticized PVC in order to improve thermal stability during processing determined by using the stabilizer alone. The compositions described in this document have shown good stability properties during processing into finished articles.

The object of the present invention is to overcome the problems encountered in known stabilizing systems, while at the same time increasing the effectiveness of those which have proved to be the most reliable.

An object of the present invention is hence to improve thermal stability effectiveness during processing of halogen-containing polymers, while maintaining unchanged or indeed increasing the time to degradation during processing, thus conferring to the final product an optimal colour and the maintenance thereof for as long as possible.

A further object is to provide thermal stability to halogen-containing polymers in those fields of application that use polymers in both rigid and plasticized formulations, thus reducing costs compared to known formulations.

### SUMMARY OF THE INVENTION

The aforementioned objects have been achieved by means of a composition for stabilizing halogen-containing polymers comprising:
a) disodium adipate, and
b) at least one compound selected from the group consisting of M(ClO₄)k and (CF₃SO₃)ₙM wherein M is selected from the group consisting of H⁺, Li⁺, Na⁺, K⁺, Mg²⁺, Ca²⁺, Ba²⁺, Zn²⁺, Al³⁺ and NH₄⁺ and k and n are 1, 2 or 3 depending on the valency of M, and wherein b) is not perchlorate of barium.

In another aspect, the invention concerns a halogenated resin in rigid or plasticized formulation comprising a halogen-containing polymer and a stabilizing composition of the invention.

In a preferred embodiment, the invention relates to a halogenated resin in rigid formulation comprising polyvinyl chloride (PVC), more preferably chlorinated polyvinyl chloride (C-PVC), and a stabilizing composition of the invention.

### DESCRIPTION OF THE FIGURES

The characteristics and advantages of the invention will become evident from the following detailed description and the accompanying figures wherein:
- Figure 1 is a graph representing the yellowness indices (YI) over time for Formulation 3 of the invention and for comparative Formulations 1 and 2 of example 1;
- Figure 2 is a graph representing the yellowness indices (YI) over time for Formulation 5 of the invention and comparative Formulation 4 of example 2;
- Figure 3 is a graph representing the yellowness indices (YI) over time for Formulation 8 of the invention and comparative Formulations 6 and 7 of example 3; and
- Figure 4 is a graph representing the yellowness indices (YI) over time for Formulation 10 of the invention and comparative Formulation 9 of example 4.

### DETAILED DESCRIPTION OF THE INVENTION

The invention therefore concerns a composition for stabilizing halogen-containing polymers comprising: a) disodium adipate, and b) a compound selected from the group consisting of M(ClO₄)k and (CF₃SO₃)ₙM wherein M is selected from the group consisting of H⁺, Li⁺, Na⁺, K⁺, Mg²⁺, Ca²⁺, Ba²⁺, Zn²⁺, Al³⁺ and NH₄⁺ and k and n are 1, 2 or 3 depending on the valency of M, and wherein b) is not perchlorate of barium.

In the present invention, the term:
- "halogen-containing polymer" means polymers of vinyl chloride, including homopolymers, chlorinated polyvinyl chloride (C-PVC), copolymers of vinyl chloride with ethylene-type unsaturated compounds, PVC-VA (vinyl acetate) copolymers, PVC-acrylate, polymer mixtures of polyvinyl chloride with ethyl-vinyl acetate (EVA), acrylonitrile/butadiene-styrene (ABS), methacrylate-butadienestyrene (MBS), acrylonitrile butadiene (NBR), styrene-acrylonitrile (SAN), chlorinated polyethylene (CPE), polyalkylacrylate (PAA), polyalkylmethacrylate (PAMA), polyamides, polylactones;
- "halogenated resin in rigid formulation" means a halogen-containing polymer formulation substantially free of plasticizer compounds;
- "halogenated resin in plasticized formulation" means a halogen-containing polymer formulation with added plasticizer compounds.

The composition according to the invention comprises the salt disodium adipate as essential component for stabilizing the halogen-containing polymer. It is present in the composition in an amount in the range from 0.01 to 5 parts by weight, preferably from 0.02 to 2 parts by weight, per 100 parts by weight of the polymer.

According to the invention, the polymer stabilizing composition also comprises at least one compound selected from the group consisting of M(ClO₄)k and (CF₃SO₃)ₙM wherein M is selected from the group consisting of H⁺, Li⁺, Na⁺, K⁺, Mg²⁺, Ca²⁺, Ba²⁺, Zn²⁺, Al³⁺ and NH₄⁺ and k and n are 1, 2 or 3 depending on the Valency of M. M of compound b) of the invention is preferably selected from the group consisting of Li⁺, Na⁺, K⁺, Mg²⁺, Ca²⁺ and Zn²⁺, more preferably M is selected from the group consisting of Na⁺, K⁺ and Ca²⁺, and still more preferably is sodium.

The composition of the invention, in addition to disodium adipate also comprises M(ClO₄)k or (CF₃SO₃)ₙM or both.

Preferably the composition comprises perchloric acid or a perchlorate salt, more preferably the perchlorate salt of a cation selected from the group consisting of Li⁺, Na⁺, K⁺, Mg²⁺, Ca²⁺ and Zn²⁺, being even more preferably the perchlorate salt of sodium.

The perchloric acid or perchlorate salt, preferred for the purposes of the invention, can be used in various forms, for example as salts or aqueous or organic solutions, supported on various materials such as PVC, calcium silicate, zeolites or hydrotalcites or bound to a hydrotalcite by chemical reaction.

Furthermore, among perchlorates of the invention, complexes of metal perchlorate are preferred, more preferably sodium perchlorate, with triethylene glycol, butyldiglycol or polyethylene glycol.

The perchloric acid or its salt is preferably included in the composition of the invention in an amount in the range from 0.001 to 2 parts by weight, more preferably from 0.005 to 1 part by weight, per 100 parts by weight of polymer.

The stabilizing composition of the invention can comprise (CF₃SO₃)ₙM as the compound b). Advantageously, (CF₃SO₃)ₙM is trifluoromethanesulphonic acid or a sodium salt thereof, more preferably it is sodium trifluoromethanesulphonate.

The composition of the invention can also comprise one or more conventional stabilizers and co-stabilizers, selected from the group consisting of metal soaps, organotin compounds, antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

The composition of the invention preferably comprises one or more stabilizers.

The stabilizer is preferably contained in the stabilizing composition of the invention in an amount in the range from 0.05 to 4 parts by weight of halogen-containing polymer. Preferably the stabilizers comprised in the composition of the invention are combinations of metal soaps and/or organotin compounds, polyols, antioxidants, organic stabilizers, metal-free stabilizers etc.

The following can be cited as non-limiting examples of stabilizers:

### Metal soaps

All metal soaps used as polyvinyl chloride (PVC) stabilizers are suitable for the invention. These are preferably organic salts of sodium, lithium, potassium, calcium, zinc, magnesium, aluminium salts of saturated C₂-C₂₂ aliphatic carboxylates, unsaturated C₃-C₂₂ aliphatic carboxylates, saturated C₂-C₂₂ aliphatic carboxylates substituted with at least one OH group, or whose chain is interrupted by at least one oxygen atom (oxyacids), cyclic or bicyclic carboxylates containing from 5 to 22 carbon atoms, phenylcarboxylates unsubstituted or substituted with at least one OH group and/or substituted with C₁-C₁₆ alkyl, naphthylcarboxylates unsubstituted or substituted with at least one OH group and/or substituted with C₁-C₁₆ alkyl, phenyl (C₁-C₁₆) alkylcarboxylates, naphthyl (C₁-C₁₆) alkylcarboxylates, or phenolates unsubstituted or substituted with C₁-C₁₂ alkyl.

Among these, the following can be cited: metal salts of monovalent carboxylic acids such as acetic acid, propionic acid, butyric acid, valeric acid, hexanoic acid, n-heptanoic acid, octanoic acid, neodecanoic acid, 2-ethylhexanoic acid, nonanoic acid, decanoic acid, undecanoic acid, dodecanoic acid, tridecanoic acid, myristic acid, palmitic acid, lauric acid, isostearic acid, stearic acid, 12-hydroxystearic acid, 9,10-dihydroxystearic acid, oleic acid, 3,6-dioxaheptanoic acid, 3,6,9-trioxadecanoic acid, behenic acid, benzoic acid, p-tert-butylbenzoic acid, dimethylhydroxybenzoic acid, 3,5-di-tert-butyl4-hydroxybenzoic acid, toluic (methylbenzoic) acid, dimethylbenzoic acid, ethylbenzoic acid, n-propylbenzoic acid, salicylic acid, p-tert-octylsalicylic acid and sorbic acid; metal salts of bivalent or monoesterified carboxylic acids such as oxalic acid, malonic acid, succinic acid, glutaric acid, adipic acid, fumaric acid, pentane-1,5-dicarboxylic acid, hexane-1,6-dicarboxylic acid, heptane-1,7-dicarboxylic acid, octane-1,8-dicarboxylic acid, 3,6,9-trioxadecane-1,10-dicarboxylic acid, lactic acid, malonic acid, maleic acid, tartaric acid, oxalic acid, salicylic acid, phthalic acid, isophthalic acid, terphthalic acid, hydroxyphthalic acid, and the diesters or triesters of tri- or tetra-valent carboxylic acids such as hemimellitic acid, trimellitic acid, pyromellitic acid, citric acid, and metal salts of mono- or di-esterified phosphoric acid or monoesterified phosphorous acid as described in JP3275570; and colophonic acids (rosin acids such as abietic acid), and superbasic carboxylates.

Metal soaps preferred in the present invention are metal carboxylates of a carboxylic acid containing from 7 to 25 carbon atoms, being typically, benzoates, or alkanoates, and preferably C8-alkanoates, stearates, oleates, laurates, palmitates, behenates, versatates, hydroxystearates, dihydroxystearates, p-tert-butylbenzoates, and 2-ethylhexanoates.

According to the invention, a mixture of carboxylates of different structure can also be used as metal soaps. Preference is given to the compositions as aforedescribed containing a zinc and/or calcium soap.

Zn, Li, K, Mg, Ca, Na salts of the aforestated fatty acids containing from 7 to 25 carbon atoms are preferably added to the composition of the invention.

The aforedescribed metal soaps or metal soap mixture can be present in the composition, preferably, in an amount in the range from 0.05 to 3 parts by weight, more preferably from 0.1 to 1.0 parts by weight, per 100 parts by weight of polymer.

### Organtin compounds

Organotin compounds are a particularly well known and extensively used class of metal-containing thermal stabilizers for halogenated vinyl polymers. Compounds containing one or more tetravalent tin atoms, each of which has at least one direct tin-carbon bond, belong to this class. A preferred class of tin-containing thermal stabilizers shows one or more tetravalent tin atoms, each of which has at least one direct tin-oxen or tin-sulphur bond, i.e. containing the group:

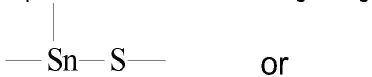

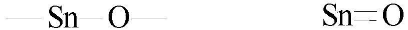

The organotin compounds preferred in the invention comprise those containing one or more tetravalent tin atoms having at least one direct tin-carbon bond and in which the remaining valencies are satisfied by bonds with oxygen or sulphur, as in the case of a residue resulting from the removal of a hydrogen bound to the sulphur of a mercaptan, mercaptoalcohol, mercaptoacid or mercaptoalcohol ester or as in the case of a residue resulting from the removal of a hydrogen bound to the oxygen of a carboxylic acid or alcohol or hydrohalogen acid, with the proviso that at least one valency is satisfied by a bond with oxygen or sulphur or a mixture of the two. Examples of compounds of this kind are: alkyl tin mercaptides, the product of reacting an organotin halide with a sulphur of an alkali metal and mercaptide, mercaptoacid ester, mercaptoalcohol, mercaptoalcohol ester or mixtures thereof.

Another class of tin-containing stabilizers included in the present invention is that of compounds not containing sulphur, wherein the tin is bound to oxygen. This group includes, by way of non-limiting example, dibutyltin maleate, dibutyltin di(stearyl maleate), dioctyltin maleate, organotin carboxylates or organotin alkoxides.

The stabilizing composition of the present invention can comprise organotin compounds preferably in an amount in the range from 0.1 to 4 parts by weight, more preferably from 0.15 to 2.0 parts by weight, per 100 parts by weight of polymer.

### Metal-free stabilizers

Among metal-free stabilizers esters of β-aminocrotonic acid can be cited. Considered suitable among these compounds are for example β-aminocrotonic acid stearyl ester, 1,4 butanediol di(β-aminocrotonic acid) ester, thio-diethanol-β-aminocrotonic acid ester.

The composition of the invention can also comprise other additives able to behave as co-stabilizers, selected from the group consisting of antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

### Antioxidants

The organic antioxidants used in the present invention are selected from those already known as additives for plastic materials. For the purposes of the invention, preferred are one or more antioxidants selected from the group consisting of alkylidene-bisphenols, esters of β-(3,5-di-tert-butyl-4-hydroxyphenyl)propionic acid with mono- or poly-alcohols, esters of β-(5-tert-butyl-4-hydroxy-3-methylphenyl)propionic acid with mono- or poly-alcohols, esters of β-(3,5-dicyclohexyl-4-hydroxyphenyl)propionic acid with mono- or poly-alcohols. There follow some examples of antioxidant classes preferred in the invention:
1. Alkylidene-bisphenols: 4,4'-isopropylidenediphenol, 2,2'-methylene-bis(6-tert-butyl-4-methylphenol), 2,2'-methylene-bis(6-tert-butyl-4-ethylphenol), 2,2'-methylene-bis[4-methyl-6-(α-methylcyclohexyl)phenol], 2,2'-methylene-bis(4-methyl-6-cyclohexylphenol), 2,2'-methylene-bis(6-nonyl-4-methylphenol), 2,2'-methylene-bis(4,6-di-tert-butylphenol), 2,2'-ethylidene-bis(4,6-di-tert-butylphenol), 2,2'-ethylidene-bis(6-tert-butyl-4-isobutylphenol), 2,2'-methylene-bis[6-(α-methylbenzyl)-4-nonylphenol], 2,2'-methylene-bis[6-(α,α-dimethylbenzyl)-4-nonylphenol], 4,4'-methylene-bis(2,6-di-tert-butylphenol), 4,4'-methylene-bis(6-tert-butyl-2-methylphenol), 1,1-bis(5-tert-butyl-4-hydroxy-2-methylphenyl)butane, 2,6-bis(3-tert-butyl-5-methyl-2-hydroxybenzyl)-4-methylphenol, 1,1,3-tri(5-tert-butyl-4-hydroxy-2-methylphenyl)butane, 1,1-bis(5-tert-butyl-4-hydroxy-2-methylphenyl)-3-n-dodecilmercaptobutane, ethylene glycol bis[3,3-bis(3'-tert-butyl-4'-hydroxyphenyl)butyrate], bis(3-tert-butyl-4-hydroxy-5-methylphenyl)dicyclopentadiene, bis[2-(3'-tert-butyl-2'-hydroxy-5'-methylbenzyl)-6-tert-butyl-4-methyl-phenyl]terephthalate, 1,1-bis(3,5-dimethyl-2-hydroxyphenyl)butane, 2,2-bis(3,5-di-tert-butyl-4-hydroxyphenyl)propane, 2,2-bis(4-hydroxyphenyl)propane, 2,2-bis(5-tert-butyl-4-hydroxy-2-methylphenyl)-4-n-dodecylmercaptobutane, 1,1,5,5-tetra-(5-tert-butyl-4-hydroxy-2-methylphenyl)pentane.
2. Esters of β-(3,5-di-tert-butyl-4-hydroxyphenyl)propionic acid with mono or poly alcohols such as methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thioundecanol, 3-thiopentadecanol, trimethylhexanediol, trimethylolpropane, ditrimethylolpropane, 4-hydroxymethyl-1-phospha-2,6,7-trioxabicyclo-[2.2.2]-octane.
3. Esters of β-(5-tert-butyl-4-hydroxy-3-methylphenyl)propionic acid with mono or poly alcohols, such as methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, dipentaerythritol, tris(hydroxyethyl) isocyanurate, N,N'-bis(hydroxyethyl)oxalamide, 3-thioundecanol, 3-thiopentadecanol, trimethylhexanediol, trimethylolpropane, 4-hydroxymethyl-1-phospha-2,6,7-trioxabicyclo-[2.2.2]-octane.
4. Esters of β- 3,5-dicyclohexyl-4-hydroxyphenyl)propionic acid with mono or poly alcohols such as methanol, ethanol, octanol, octadecanol, 1,6-hexanediol, 1,9-nonanediol, ethylene glycol, 1,2-propanediol, neopentyl glycol, thiodiethylene glycol, diethylene glycol, triethylene glycol, pentaerythritol, tris(hydroxyethyl) isocyanurate, N,N'-bis(hydroxyethyl)oxalamide, 3-thioundecanol, trimethylolpropane, 4-hydroxymethyl-1-phospha-2,6,7-trioxabicyclo-[2.2.2]-octane. Particularly preferred according to the invention are 2,2'-methylene-bis(6-tert-butyl-4-methylphenol), commercially available as Lowinox® 22 M46 produced by Great Lakes Chem. Corp., and esters of β-(3,5-di-tert-butyl-4-hydroxyphenyl)propionic acid with octadecanol and with pentaerythritol, respectively Arenox® A76 and Arenox® A10, produced by Reagens, and bisphenol A.

The aforedescribed antioxidants, if present, are comprised preferably in an amount in the range from 0.01 to 1.0 parts by weight, more preferably from 0.1 to 0.5 parts by weight, per 100 parts by weight of polymer.

### Organic co-stabilizers

The invention also provides for the optional presence of organic co-stabilizers in the composition of the invention to further increase the effectiveness of the stabilizing composition. The organic co-stabilizers optionally present in the stabilizing composition of the invention are preferably one or more compounds selected from: 1) β-diketonic compounds, 2) dihydropyridines or polydihydropyridines, 3) uracil derivatives.
1. β-Diketonic compounds: The 1,3-dicarbonyl compounds advantageously present in the composition of the invention are linear or cyclic dicarbonyl compounds. Among these, particularly preferred are the dicarbonyl compounds of formula: 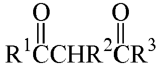 wherein
   R¹ is C₁-C₂₂ alkyl, C₅-C₁₀ hydroxyalkyl, C₃-C₇ alkenyl, phenyl, phenyl substituted with OH, by C₁-C₄ alkyl or by C₁-C₄ halogenalkyl, C₇-C₁₀ phenylalkyl, C₅ -C₁₂ cycloalkyl, C₅-C₁₂ cycloalkyl substituted with C₁-C₄ alkyl.
   R² is hydrogen, C₁-C₈ alkyl, C₃-C₇ alkenyl, C₂-C₁₂ phenyl, C₇-C₁₂ alkylphenyl, C₇-C₁₀ phenylalkyl,
   R³ has the same meaning as given to R¹.
      Particularly preferred are dibenzoylmethane, stearoylbenzoylmethane and dehydroacetic acid.
2. Dihydropyridines (DHP) or polydihydropyridines (polyDHP). Among those monomeric dihydropyridine derivatives, preferred according to the invention, carboxylic acids esters can be cited whose formula can be generally indicated by: 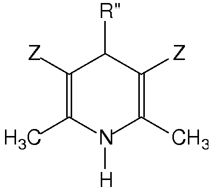 wherein Z is CO₂C₂H₅, CO₂(n-C₁₂H₂₅), R" is hydrogen, C₁-C₁₈ alkyl, C₂ -C₁₈ alkoxycarbonyl or C₆ -C₁₀ aryl.

Particularly preferred are 3-bisdodecyloxycarbonyl-2,6-dimethyl-1,4-dihydropyridine, commercially available as Stavinor® D507 and produced by Atochem.

Suitable preferred polydihydropyridines are compounds represented by the following formula: 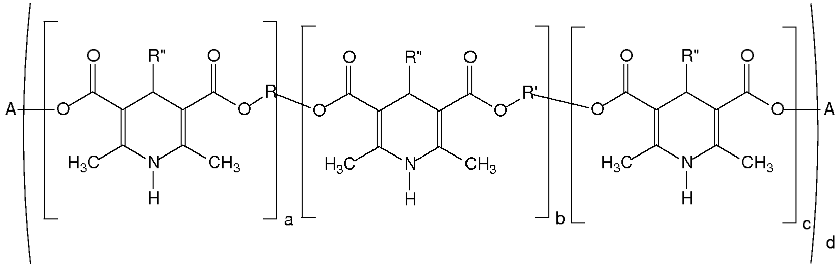
wherein A is C₁-C₂₂ alkyl, optionally substituted with C₁-C₁₈ alkoxy, C₁-C₁₈ alkylthio, hydroxyl, acryloyloxy, methacryloyloxy, halogen and phenyl,
a and b are numbers from 0 to 20,
c is 0 or 1,
d is a number from 1 to 6 and the conditions d(a+b+c)>1 and a+b>0 are satisfied,
R and R' are, each independently of the other, methylene or phenylene or an alkylene of the type (-CᵣH₂ᵣ-X-)ₛCᵣH₂ᵣ-,
r is a number from 2 to 18
s is a number from 0 to 10
X is oxygen or sulphur
R" is hydrogen, C₁ -C₁₈ alkyl, C₂-C₁₈ alkoxycarbonyl or C₆-C₁₀ aryl.

Particularly preferred is thiodiethylene-bis[5-methoxycarbonyl-2,6-dimethyl-1,4-dihydropyridine-3-carboxylate] known commercially as Synesal® M, produced by Lagor.

### 3. Uracil derivatives

The uracil derivatives advantageously present in the composition of the invention are described by the following general formula: 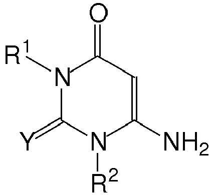 wherein
R¹ and R² are, each independently of the other, hydrogen, C₁-C₁₂ alkyl, C₃-C₆ alkenyl, C₅-C₈ cycloalkyl optionally substituted with 1 to 3 C₁-C₄ alkyl, C₁-C₄ alkoxy, C₅-C₈ cycloalkyl or hydroxyl or with chlorine atoms, or C₇-C₉ phenylalkyl optionally substituted on the phenol ring with 1 to 3 C₁-C₄ alkyl, C₁-C₄ alkoxy, C₅-C₈ cycloalkyl or hydroxyl or with chlorine atoms; Y can be oxygen or sulphur.

Examples of C₁-C₄ alkyl are methyl, ethyl, n-propyl, isopropyl, n-, iso-, sec-, or tert-butyl.

Examples of C₁-C₁₂ alkyl are, in addition to the aforementioned radicals, pentyl, hexyl, heptyl, octyl, 2-ethylhexyl, isooctyl, nonyl, decyl, undecyl, dodecyl.

Examples of C₁-C₄ alkoxy are methoxy, ethoxy, propoxy, isopropoxy, butoxy, isobutoxy.

Examples of C₅-C₈ cycloalkyl are cyclopentyl, cyclohexyl, cycloheptyl, cyclooctyl.

Examples of C₇-C₉ phenylalkyl are benzoyl, 1- or 2- phenylethyl, 3-phenylpropyl, a,a-dimethylbenzyl, or 2-phenylisopropyl, preferably benzyl. If the cycloalkyl or phenyl groups of the phenylalkyl radical are substituted, then they are substituted with one or two substituents, preferably selected from chlorine, hydroxyl, methyl or methoxy.

Examples of C₃-C₆ alkenyl are allyl, methallyl, 1-butenyl, or 1-hexanyl, preferably allyl.

Preferred are the compounds of the aforestated formula, wherein R¹ and R² are, each independently of the other, C₁-C₄ alkyl and hydrogen; in particular, the compound wherein R¹ and R² are methyl is preferred.

Among the uracil derivatives there can also be optionally present in the composition of the invention oligomeric or polymeric derivatives of formula: 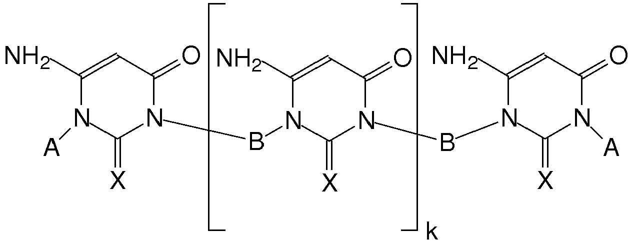 wherein
A is n-octyl, n-octadecyl, oleyl, phenyl, cyclohexyl or 3-hydroxyphenyl and
B is hexamethylene, 3-methylene-3,5,5,trimethylcyclohexan-1-yl, 4,4'-methylene-bis-cyclohexyl, 4,4'-methylene -bis-phenyl,
X is oxygen, or
if A is phenyl and B is hexamethylene, then X is sulphur;
k varies from 0 to 17, preferably from 0 to 2. The oligomer derivatives described above are preferred in the invention.

The aforedescribed organic antioxidants can be present preferably in an amount in the range from 0.01 to 1.0 parts by weight, in particular from 0.1 to 0.5 parts by weight, per 100 parts by weight of polymer.

### Alkanolamines

Alkanolamines, advantageously present in the composition of the invention, are compounds of general formula: 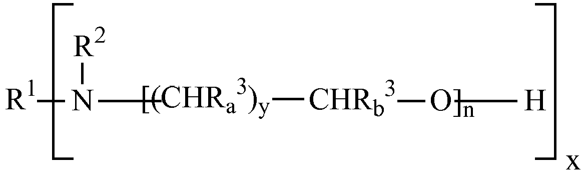 wherein
x=1,2,3
y=1,2,3,4,5 or 6
n=1-10
R¹ and R² are independently H, C₁-C₂₂ alkyl, 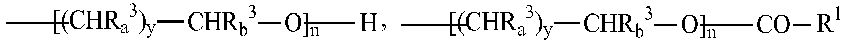 C₂-C₂₀ alkenyl, C₂-C₁₈ acyl, C₄-C₈ cycloalkyl, which can also be hydroxyl-substituted in position β, C₆-C₁₀ aryl, C₇-C₁₀ arylalkyl or alkylaryl, or
if x=1, then R¹ and R² can be additionally combined with nitrogen to form a cyclo of 4-10 carbon atoms and optionally up to 2 heteroatoms, or
if x=2, then R¹ can additionally be C₂-C₁₈ alkylene, which can be hydroxyl-substituted to both carbon atoms in β and/or can be interrupted by one or more NR groups;
Rₐ³, R_{b}³ are independently C₁-C₂₂ alkyl, C₂-C₆ alkenyl, C₆-C₁₀ aryl, H or CH₂-X-R⁵, where X is oxygen, sulphur, -O-CO- or CO-O-;
R⁴ is C₁-C₁₈ alkyl, alkenyl or phenyl and
R⁵ is H, C₁-C₂₂ alkyl, C₂-C₂₂ alkenyl, or C₆-C₁₀ aryl.

Preferred trialkanolamines are those wherein Rₐ³, R_{b}³ are, each independently of the other, H or methyl, and y=1.

Examples of preferred alkanolamines according to the general formula are: tri(hydroxyethyl)amine, tri(hydroxypropyl)amine.

The aforedescribed alkanolamines can be present preferably in an amount in the range from 0.01 to 1.0 parts by weight, in particular from 0.1 to 0.5 parts by weight, per 100 parts by weight of polymer.

### Hydrotalcites

The hydrotalcites optionally present in the compositions of the invention can be described by the general formula:

[m²⁺₁₋ₓM³⁺ₓ(OH)₂]^{x+}[Aⁿ⁻_{x/n}mH₂O]^{x-}

wherein M²⁺ represents at least one bivalent metal cation of the group consisting of Mg, Zn, Ni, Ca; M³⁺ represents at least one trivalent metal cation of the group consisting of Al, Fe; Aⁿ⁻ is an anion having a valency comprised between 1 and 4;
x and m represent positive numbers which satisfy the following expressions 0.2<x ≤ 0.33
m>0

In the above general formula, Aⁿ⁻ represents an anion selected from the group consisting of CO₃²⁻, OH⁻, HCO³⁻, ClO⁻₄; an acetate ion(-), a salicylate ion(-), a tartrate ion(2-),

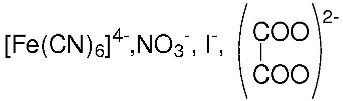

Preferred hydrotalcites of the invention are those wherein Aⁿ⁻ is selected from CO₃²⁻, OH⁻.

The preferred empirical formulas for natural and for some synthetic hydrotalcites considered for the invention are:

Mg₆Al₂(OH)₁₆CO₃4H₂O

Mg_{4.5}Al₂(OH)₁₃CO₃3.5H₂O

Mg₄Al₂(OH)₁₂CO₃2.85H₂O

Mg_{4.5}Al₂(OH)_{11.36}(CO₃)_{1.67}mH2O

The aforedescribed hydrotalcites can be present in the composition of the invention preferably in an amount from 0.1 to 3 parts by weight, in particular from 0.2 to 1 parts by weight, per 100 parts by weight of PVC.

### Zeolites

The zeolites optionally present in the compositions of the invention can be described by the general formula:

M _{q/a}[(AlO₂)_{q}(SiO₂)ᵣ]▪wH₂O

wherein a is the charge of the cation M,
M is an element of the alkali or alkaline-earth metal group, in particular Na, K, Mg, q is a number greater than or equal to 2,
the ratio q/r is a number greater than or equal to 0.4, being preferably a number between 0.4 and 10.5, and w is a number between 0 and 300.

The preferred zeolites, optionally present in the composition of the invention, are described in "Atlas of Zeolite Structure Types", W. M. Meier and D. H. Olson, Butterworths, 3rd Edition, 1992.

Particularly preferred are those zeolites having a particle size mainly in the range from 0.5 to 10 micron.

The preferred zeolites, which are known *per se,* have an effective mean cavity diameter of 3-5 Å and can be prepared by known methods.

Also particularly preferred are zeolites of type NaA, which have an effective mean cavity diameter of 4 Å, and are hence known as 4A zeolites, indicated by the formula:

Na₁₂ Al₁₂ Si₁₂ O₄₈▪27H₂O

Particular preference is given to those zeolites satisfying the aforestated general formula, known as X zeolites and indicated by the formula

(Na₂,Ca,Mg)₂₉ Al₅₈ Si₁₃₄ O₃₈₄▪240H₂O

The zeolites, optionally present in the composition of the invention, are present preferably in an amount from 0.1 to 3 parts by weight, more preferably from 0.2 to 1 parts by weight, per 100 parts by weight of polymer.

### Polyols

Among polyols, optionally present in the composition of the invention, the following are preferred:
pentaerythritol, dipentaerythritol, tripentaerythritol, bistrimethylolpropane, bistrimethylolethane, trimethylolpropane, inosite, polyvinyl alcohol, sorbitol, maltite, isomaltite, lactite, licasine, mannitol, lactose, leucrose, tris(hydroxyethyl)isocyanurate, palatinite, tetramethylolcyclohexanol, tetramethylolcyclopentanol, tetramethylolcyclopyranol, glycerol, diglycerol, polyglycerol, thiodiglycerol, or 1-0-a-D-glycopyranosyl-D-mannitol dihydrate.

Most preferred of these compounds are tris(hydroxyethyl)isocyanurate (THEIC), pentaerythritol, dipentaerythritol, trimethylolpropane, bistrimethylolpropane, sorbitol. The polyols, if present, are present preferably in an amount in the range from 0.01 to 2 parts by weight, more preferably from 0.1 to 1 parts by weight, per 100 parts by weight of PVC.

### Hydrates and oxides of alkali and alkaline-earth metals

Among hydrates and oxides of alkali and alkaline-earth metals, optionally present in the composition of the invention, the following are preferred:
lithium oxide, sodium oxide, potassium oxide, magnesium oxide, calcium oxide and lithium hydroxide, sodium hydroxide, potassium hydroxide, magnesium hydroxide, calcium hydroxide.

The hydrates and oxides of alkali and alkaline-earth metals, if present, are preferably in an amount in the range from 0.1 to 3 parts by weight, more preferably from 0.2 to 1 parts by weight, per 100 parts by weight of polymer.

### Phosphites

The phosphites, optionally present in the composition of the invention, are preferably organic phosphites of general formula P(OR)₃, wherein the radicals R are identical or different and can be C₆-C₁₈ alkyl, C₆-C₁₈ alkenyl, C₅-C₇ cycloalkyl.

Also included as preferred in the invention are acid phosphites of general formula P(OH)R₂, wherein the radicals R are identical or different and selected from C₆-C₁₈ alkyl, C₆-C₁₈ alkenyl, phenyl, mono- or di-alkylphenyl, or C₅-C₇ cycloalkyl.

Phosphites with the following general formula can also be present in the composition of the invention: 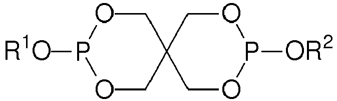 wherein R¹ and R² are identical or different and are C₆-C₁₈ alkyl, C₆-C₁₈ alkenyl, phenyl, mono- or di-alkylphenyl, or C₅-C₇ cycloalkyl. Preferred among these latter phosphites are those wherein R¹, R² = stearyl or

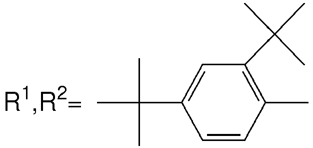

Phosphites with the following general formula can also be present:

(R¹O)₂-PO-R²-OP-(OR³)₂

wherein R¹ and R³ are identical or different and are C₆-C₁₈ alkyl, C₆-C₁₈ alkenyl, phenyl, mono- or di-alkylphenyl, or C₅-C₇ cycloalkyl, R² is alkyl, alkyloxy, aryl or arylalkyl.

Each C₆-C₁₈ alkyl substituent present is, for example, n-hexyl, n-octyl, n-nonyl, decyl, dodecyl, tetradecyl, hexadecyl, octadecyl. Preferred are groups having from 8 to 18 carbon atoms.

The preferred phosphites in the present invention include:
tri(isodecyl)phosphite, tri(nonylphenyl)phosphite, tri(isotridecyl)phosphite, diphenyl isodecyl phosphite, di(isodecyl) phenyl phosphite, di(nonylphenyl) phosphite, tetraphenyl dipropyleneglycol diphosphite, 4,4' isopropylidenediphenol tetra(C₁₂-₁₅ alcohol) phosphite, bis(2,4-di-t-butylphenyl)pentaerythritol diphosphite, distearyl pentaerythritol diphosphite.

The phosphites, if present, are preferably in an amount in the range from 0.1 to 2 parts by weight, more preferably from 0.2 to 0.5 parts by weight, per 100 parts by weight of polymer.

The composition for stabilizing the halogen-containing polymers of the invention if added to the halogen-containing polymer, provides the resultant halogenated resin with excellent thermal stability properties, in particular an excellent long-term stability, simultaneously with an excellent initial colour and good retention thereof in the final halogenated resin.

The invention hence also concerns a halogenated resin in plasticized or rigid formulation comprising a halogen-containing polymer and a stabilizing composition of the invention. In a first preferred embodiment of the invention, the halogen-containing polymer is polyvinyl chloride PVC, more preferably polyvinyl chloride in rigid form. In the most preferred form of the invention, polyvinyl chloride (PVC) in rigid formulation is stabilized with the stabilizing composition of the invention which comprises disodium adipate, at least one perchlorate salt and one or more stabilizing compounds. Even more preferably, in this embodiment the perchlorate salt is sodium perchlorate.

The stabilized halogenated resin, preferably stabilized polyvinyl chloride (PVC), according to the present invention can be used in formulations for extrusion, injection moulding, blow moulding, calendaring, and can be formed into finished articles such as fibres, ducting, engineering profiles and window profiles, pipes and connectors, film, sheets and bottles.

In the embodiment which comprises stabilization of rigid polyvinyl chloride, the stabilized rigid polyvinyl chloride resins obtained are advantageously suitable for transparent and non-transparent applications, such as for the production of compact and expanded tubes, profiles and sheets.

In a second preferred embodiment, the halogen-containing polymer is chlorinated polyvinyl chloride (C-PVC). In this second preferred embodiment of the invention, the stabilizing composition of the invention for obtaining stabilized chlorinated polyvinyl chloride (C-PVC) comprises disodium adipate, at least one perchlorate salt and one or more stabilizers. Even more preferably, in said second embodiment the perchlorate salt is sodium perchlorate.

The halogen-containing polymer can be used to obtain semi-rigid or plasticized halogenated resins. For this purpose, halogen-containing polymer, preferably polyvinyl chloride, can be added with plasticizer substances. Examples of preferred plasticizer substances, in the case of polyvinyl chloride, are esters of C₄-C₂₀ alcohols such as adipates, phthalates, trimellitates, azelates, sebacates, benzoates, phosphates, epoxidized compounds, typically epoxidized soya oil, polymeric plasticizers such as polyesters, polyadipates, polyphosphates and the like. The plasticizer amount varies widely according to the final use of the plasticized resin, said amount being preferably within the range from 5 to 120 parts by weight per 100 parts by weight of polyvinyl chloride (PVC), more preferably from 20 to 70 parts by weight per 100 parts by weight of PVC.

The halogen-containing polymer, in particular polyvinyl chloride (PVC) or chlorinated polyvinyl chloride (C-PVC) can also be advantageously mixed with other ingredients such as dyes, pigments, antiflame agents, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing and exposure to light.

Some examples embodiments of the invention follow, with examples of evaluation of the benefits deriving from the stabilizer composition of the invention, provided as non-limiting examples of the invention.

### EXAMPLES

Some of the stabilizing compositions of the invention were prepared, and were added to polyvinyl chloride and additives for the preparation of polyvinyl chloride resins in rigid formulation, these latter then being subjected to static thermal stability tests and Congo Red (CR) thermal stability tests.

### Static thermal stability tests

Static thermal stability of the PVC compositions stabilized with the products of the invention was measured by static thermal stability tests in accordance with the two different methods given below.

The final formulations of rigid PVC containing the stabilizing compounds as indicated in the following examples were worked by lamination in a cylinder mixer for 3 minutes at 190ºC.

METHOD 1: Rectangular test samples (1 x 24 cm) were cut from each sheet of thickness 0.1-0.3 mm. The samples were then fixed on the sliding trolley of a temperature-controlled Metrastat dynamic oven. The duration of the test included a pre-heating time.

At regular intervals, the degree of colour change was judged by reading the yellowness index (YI) according to ASTM D-1925, using an X-Rite QA2000 colorimeter. According to said standard, the yellowness index (YI) corresponded to a number calculated from spectrophotometric data that described the change in colour of a test sample from clear or white towards yellow.

METHOD 2: Rectangular test samples 5 x 5 cm in size were cut from each sheet of thickness 0.3-0.5 mm. The samples were then placed in an oven (Ceast WTB Binder) provided with rotating plates and thermostated at 200ºC. The samples were then subjected to heating. At regular 10 minute intervals, a sample was taken and the colour change was judged by reading the yellowness index (YI) according to ASTM D-1925, using an X-Rite QA2000 colorimeter.

### Thermal stability determination by Congo Red test

The thermal stability was also determined by measuring the Congo Red (CR) value.

The Congo Red value was obtained in accordance with DIN VDE 0472(614). According to this standard, 50 mg of PVC sample obtained from the sheet were placed in a test-tube and thermostated at 180ºC. The time required for the sample to release HCI was then measured by noting the moment wherein the colour change occurred on an indicator paper placed at the top of the test-tube.

### Example 1

The ingredients in the amounts indicated in Table 1 were homogeneously mixed to prepare the stabilized rigid PVC formulation of Example 1. The ingredient amounts in Table 1 are expressed in parts by weight per 100 parts by weight of PVC (phr). Formulations 1 and 2 were comparative formulations, while Formulation 3 contained the stabilizing composition of the invention.

**Table 1: Ingredients of Formulations 1, 2 and 3**

| | Formulation 1 | Formulation 2 | Formulation 3 |
|---|---|---|---|
| INGREDIENTS | | | |
| PVC K67 | 100 | 100 | 100 |
| Calcium carbonate | 12 | 12 | 12 |
| High impact acrylic | 6.5 | 6.5 | 6.5 |
| Acrylic processing | 0.7 | 0.7 | 0.7 |
| aid | | | |
| THEIC* | 0.2 | 0.2 | 0.2 |
| ARENOX A76** | 0.05 | 0.05 | 0.05 |
| REALUBE SD*** | 0.45 | 0.45 | 0.45 |
| Hydroxystearic acid | 0.35 | 0.35 | 0.35 |
| Polyethylene wax | 0.15 | 0.15 | 0.15 |
| Oxidized polyethylene wax | 0.15 | 0.15 | 0.15 |
| Paraffin wax | 0.1 | 0.1 | 0.1 |
| Ca Stearate | 0.3 | 0.3 | 0.3 |
| Zn Stearate | 0.3 | 0.3 | 0.3 |
| Disodium adipate | 0.35 | - | 0.35 |
| 60% NaClO₄ in water | - | 0.05 | 0.05 |

| | | | |
|---|---|---|---|
| *THEIC: polyol **Arenox ® A76: hindered phenolic antioxidant ***Realube SD: distearyl phthalate | | | |

The sheet samples of Formulations 1, 2 and 3 were subjected to the static stability test at 190°C with a pre-heating time of 20 minutes for a total test time of 120 minutes (Method 1) and a Congo Red stability test. The evaluation results are in Table 2.

**Table 2: Evaluation of Formulations 1, 2 and 3**

| | Formulation 1 | Formulation 2 | Formulation 3 |
|---|---|---|---|
| Congo Red (minutes) | 50 | 30 | 55 |

| STATIC THERMAL STABILITY | | | |
|---|---|---|---|
| minutes | YI | YI | YI |
| 12 | 70 | 58 | 50 |
| 24 | 71 | 61 | 51 |
| 36 | 76 | 68 | 56 |
| 48 | 82 | 75 | 67 |
| 60 | 91 | 79 | 78 |
| 72 | 97 | 80 | 85 |
| 84 | 100 | 80 | 90 |
| 96 | 111 | degr | 93 |
| 108 | degr | - | 98 |

Formulation 3 of the invention was found to have higher Congo Red values than comparative Formulations 1 and 2.

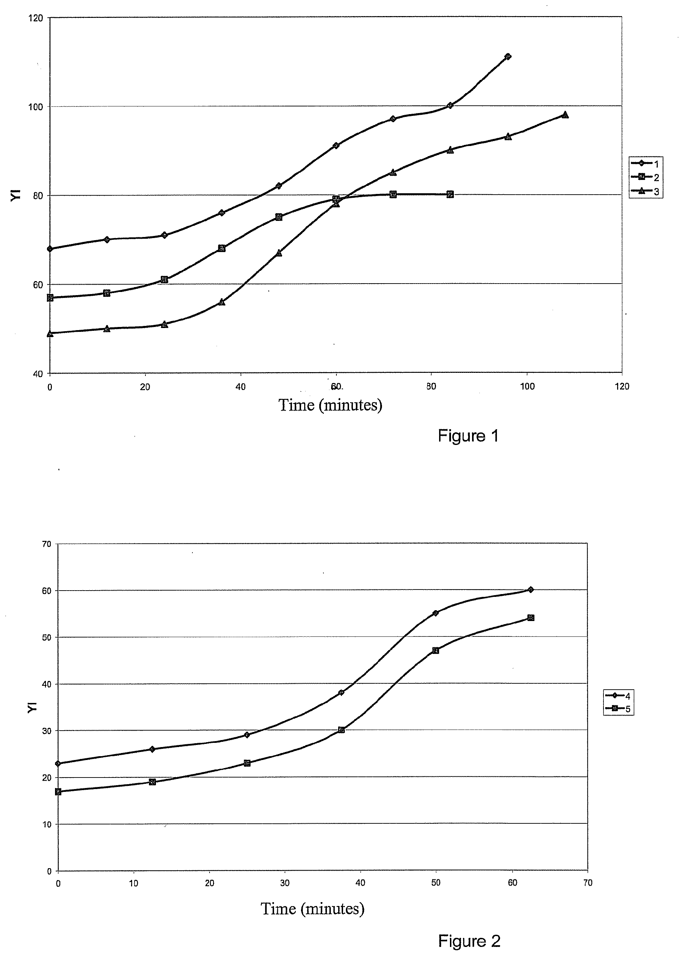

The yellowness indices over time for Formulations 1, 2 and 3 are given in graphical form, shown in Figure 1, in order to facilitate the comparison.

As can be seen in Figure 1, Formulation 3 of the invention which contained both disodium adipate and sodium perchlorate, showed already initially a high yellowness index value and did not degrade even after 108 minutes of treatment at 190ºC. Formulation 1, which contained disodium adipate alone, showed an initial yellowness value of about 20 points higher than Formulation 3 of the invention, this difference being also present 98 minutes after the start of the test (YI = 111 for Formulation 1 compared to YI = 93 for formulation 3 of the invention), i.e. before Formulation 1 degraded. Formulation 2, which contained sodium perchlorate alone, although it initially showed a better yellowness index than Formulation 1, nevertheless always had a YI value lower than Formulation 3 of the invention. Moreover, Formulation 2, even if at 84 minutes from start of the test showed a yellowness index lower than the formulation of the invention, it, nevertheless, immediately degraded, in contrast to Formulation 3 of the invention which did not degrade even at 108 minutes.

### Example 2

The ingredients in the amounts indicated in Table 3 were homogeneously mixed to prepare the rigid PVC formulation of Example 2. The ingredient amounts in Table 3 are expressed in parts by weight per 100 parts by weight of PVC (phr). Formulation 4 was a comparative formulation, while Formulation 5 contained the stabilizing composition of the invention.

**Table 3: Ingredients of Formulations 4 and 5**

| | Formulation 4 | Formulation 5 |
|---|---|---|
| INGREDIENTS | | |
| PVC K57 | 100 | 100 |
| Calcium carbonate | 5 | 5 |
| Calcium stearate | 0.6 | 0.6 |
| Paraffin wax | 1.45 | 1.45 |
| Oxidized polyethylene wax | 0.15 | 0.15 |
| Titanium dioxide | 1 | 1 |
| Reatinor RT 6650** | 0.2 | 0.2 |
| Disodium adipate | 0.1 | 0.09 |
| 60% NaClO₄ in water | - | 0.01 |

| | | |
|---|---|---|
| ** Reatinor RT6650: mixture of mono/dibutyl tin-mercapto tall oil ethanolate | | |

The formulations of Table 3 were subjected to the Congo Red (CR) stability test and static thermal stability test at 200ºC with a pre-heating time of 30 minutes for a total test time of 90 minutes (Method 1). The evaluation results are in Table 4.

**Table 4: Evaluation of Formulations 4 and 5**

| | Formulation 4 | Formulation 5 |
|---|---|---|
| Congo Red (minutes) | 36 | 40 |

| STATIC THERMAL STABILITY | | |
|---|---|---|
| minutes | YI | YI |
| 0 | 23 | 17 |
| 12.5 | 26 | 19 |
| 25 | 29 | 23 |
| 37.5 | 38 | 30 |
| 50 | 55 | 47 |
| 62.5 | 60 | 54 |
| 75 | degr | degr |

As can be seen from Table 4 and Figure 2, Formulation 5 of the invention which comprised both disodium adipate and sodium perchlorate, presented a decidedly lower yellowness index value (YI) than the comparative Formulation 4 over the entire duration of the evaluation period.

Formulation 5 of the invention therefore proved to be more stable than the comparative formulation in terms of both greater red congo value and static thermal stability at 200ºC. Said increased thermal stability was shown to be extremely advantageous, on the one hand, as it allowed for longer processing times and better colour retention during processing of PVC in rigid formulation, and, on the other hand, it enabled lower amounts of disodium adipate to be used, while achieving better stability.

### Example 3

The ingredients in the quantities indicated in Table 5 were homogenously mixed to prepare the stabilized rigid PVC formulation of example 3. The ingredient quantities in Table 5 were expressed in parts by weight, per 100 parts by weight of PVC (phr). Formulations 6 and 7 were comparative Formulations and Formulation 8 contained the stabilizing composition of the invention.

**Table 5: Ingredients of Formulations 6, 7 and 8**

| | Formulation 6 | Formulation 7 | Formulation 8 |
|---|---|---|---|
| INGREDIENTS | | | |
| PVC K65 | 100 | 100 | 100 |
| Polyethylene wax | 0.1 | 0.1 | 0.1 |
| Oxidized polyethylene wax | 0.1 | 0.1 | 0.1 |
| Reatinor RT6615/3** | 0.2 | 0.15 | 0.15 |
| Disodium adipate | - | 0.15 | 0.13 |
| 60% NaClO₄ in water | - | - | 0.02 |

| | | | |
|---|---|---|---|
| ** Reatinor RT6615/3: mono butyl tintris(mercapto tall oil ethanolate) | | | |

The formulations of Table 5 were subjected to the Congo Red (CR) stability test and static thermal stability test at 200ºC with a pre-heating time of 30 minutes for a total test time of 90 minutes (Method 1). The evaluation results are in Table 6.

**Table 6: Evaluation of Formulations 6, 7 and 8**

| | Formulation 6 | Formulation 7 | Formulation 8 |
|---|---|---|---|
| Red Congo (minutes) | 24 | 28 | 32 |

| STATIC THERMAL STABILITY | | | |
|---|---|---|---|
| minutes | YI | YI | YI |
| 0 | -6 | -4 | -5 |
| 12.5 | -5 | -4 | -5 |
| 25 | -5 | -1 | -3 |
| 37.5 | 59 | 20 | 5 |
| 50 | degr | 58 | 27 |
| 62.5 | - | 87 | 48 |
| 75 | - | degr | degr |

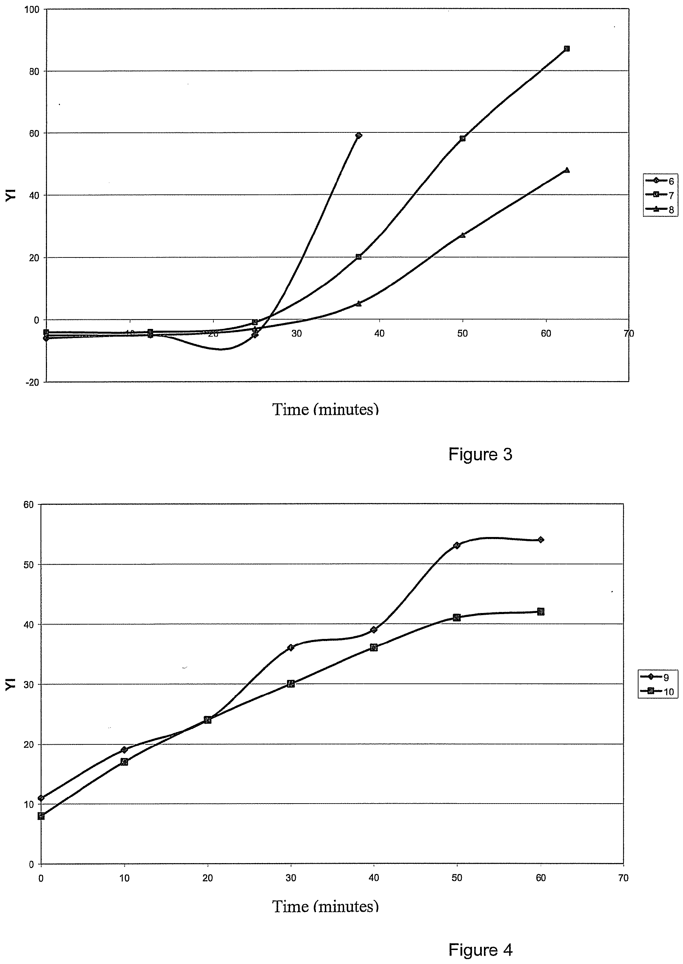

Formulation 8 of the invention showed an optimal initial colour and retention thereof up to 50 minutes, compared to Formulation 6 which was already degrading. Comparative Formulation 7 also showed a good initial colour and degraded after 50 minutes, however, it showed a decidedly higher yellowness index than that of the invention as shown in Figure 3, which gives the static thermal stability data for the three formulations.

Said increased thermal stability, in both the static thermal stability test and the red congo test, was evidently advantageous, on the one hand, as it allowed for longer processing times and better colour retention during processing of PVC in rigid formulation, on the other hand, as it enabled lower amounts of tin stabilizer and disodium adipate to be used, while obtaining better stability.

### Example 4

### Example with C-PVC

The ingredients in the amounts indicated in Table 7 were homogeneously mixed to prepare the stabilized rigid C-PVC of Example 4. The ingredient amounts in Table 7 are expressed in parts by weight per 100 parts by weight of C-PVC (phr).

Formulation 9 was a comparative formulation and Formulation 10 contained the stabilizing composition of the invention.

**Table 7: Ingredients of Formulations 9 and 10**

| | Formulation 9 | Formulation 10 |
|---|---|---|
| INGREDIENTS | | |
| C-PVC | 100 | 100 |
| High impact acrylic | 6 | 6 |
| Polyethylene wax | 1 | 1 |
| Oxidized polyethylene wax | 0.5 | 0.5 |
| TiO₂ | 4 | 4 |
| Reatinor RT 403** | 1.5 | 1.5 |
| Disodium adipate | 1 | 0.09 |
| 60% NaClO₄ | - | 0.01 |

| | | |
|---|---|---|
| **RT 403: Di butyltin (bis)2-ethylhexyl thioglycolate and Mono butyltin (tris)2-ethylhexyl thioglycolate | | |

The formulations of Table 7 were subjected to the Congo Red (CR) stability test and static thermal stability test at 200ºC (Method 2). The values indicated in Table 8 were obtained.

**Table 8: Evaluation of Formulations 9 and 10**

| | Formulation 9 | Formulation 10 |
|---|---|---|
| Congo Red (minutes) | 55 | 55 |

| STATIC THERMAL STABILITY | | |
|---|---|---|
| minutes | YI | YI |
| 0 | 11 | 8 |
| 10 | 19 | 17 |
| 20 | 24 | 24 |
| 30 | 36 | 30 |
| 40 | 39 | 36 |
| 50 | 53 | 41 |
| 60 | 54 | 42 |

Although the two formulations showed the same Congo Red values, Formulation 10 of the invention nevertheless showed lower yellowness indices (YI) than comparative Formulation 9, in particular after 50 minutes from the start of the test as is evident from Figure 4, which gives static thermal stability data for the two formulations.

## Claims

1. A composition for stabilizing halogen-containing polymers comprising:
a) disodium adipate, and
b) at least one compound selected from the group consisting of M(ClO₄)k and (CF₃SO₃)ₙM wherein M is selected from the group consisting of H⁺, Li⁺, Na⁺, K⁺, Mg²⁺, Ca²⁺, Ba²⁺, Zn²⁺, Al³⁺ and NH₄⁺ and k and n are 1, 2 or 3 depending on the valency of M, and
wherein b) is not perchlorate of barium.

2. The composition according to claim 1, wherein M of the at least one compound selected from the group consisting of M(ClO₄)k and (CF₃SO₃)ₙM is selected from the group consisting of Li⁺, Na⁺, K⁺, Mg²⁺, Ca²⁺ and Zn²⁺.

3. The composition according to claim 2, wherein M of the at least one compound selected from the group consisting of M(ClO₄)k and (CF₃SO₃)ₙM is selected from the group consisting of Na⁺, K⁺ and Ca²⁺.

4. The composition according to claim 3, wherein M of the at least one compound selected from the group consisting of M(ClO₄)k and (CF₃SO₃)ₙM is sodium.

5. The composition according to any one of claims from 1 to 4, wherein the at least one compound selected from the group consisting of M(ClO₄)k and (CF₃SO₃)ₙM is perchloric acid or a perchlorate salt.

6. The composition according to claim 5, wherein the at least one compound selected from the group consisting of M(ClO₄)k and (CF₃SO₃)ₙM is sodium perchlorate.

7. The composition according to claim 5, wherein the at least one compound selected from the group consisting of M(ClO₄)k and (CF₃SO₃)ₙM is a complex of sodium perchlorate with triethylene glycol, butyl diglycol or polyethylene glycol.

8. The composition according to any one of claims from 1 to 7, wherein the composition comprises a stabilizer.

9. The composition according to any one of claims from 1 to 8, wherein the composition comprises co-stabilizers selected from the group consisting of antioxidants, organic co-stabilizers (β-diketones and dihydropyridines or polydihydropyridines, uracil derivatives), alkanolamines, zeolites and hydrotalcites, polyols, hydrates and oxides of alkali and alkaline-earth metals and organic phosphites.

10. A halogenated resin in rigid formulation comprising a halogen-containing polymer and a stabilizing composition according to any one of claims from 1 to 9.

11. The halogenated resin according to claim 10, wherein the halogen-containing polymer is polyvinyl chloride (PVC).

12. The halogenated resin according to claim 10, wherein the halogen-containing polymer is chlorinated polyvinyl chloride (C-PVC).

13. A halogenated resin in plasticized or semi-rigid formulation comprising a halogen-containing polymer, a plasticizing substance and a stabilizing composition according to any one of claims from 1 to 9.

14. The halogenated resin according to claim 13, wherein the halogen-containing polymer is polyvinyl chloride (PVC).

15. The halogenated resin according to any one of claims from 10 to 14, wherein the resin comprises additives selected from the group consisting of dyes, pigments, antiflame agents, internal or/and external lubricants, impact modifiers, process adjuvants, light and ultraviolet radiation stabilizers, fluorescent whitening agents, fillers, gelling agents, antistatic agents, anti-fogging agents, expanders and other additives to prevent, mask or reduce deterioration caused by heating, ageing, and exposure to light.

16. The halogenated resin according to any one of claims from 10 to 15, wherein disodium adipate is present in an amount in the range from 0.01 to 5 parts by weight per 100 parts by weight of the halogen-containing polymer.

17. The halogenated resin according to claim 16, wherein disodium adipate is present in an amount in the range from 0.02 to 2 parts by weight per 100 parts by weight of the halogen-containing polymer.

18. The halogenated resin according to any one of claims from 10 to 17, wherein perchloric acid or a salt thereof is present in an amount in the range from 0.001 to 2 parts by weight per 100 parts by weight of polymer.

19. The halogenated resin according to claim 18, wherein perchloric acid or a salt thereof is present in an amount in the range from 0.005 to 1 parts by weight per 100 parts by weight of polymer.

20. The halogenated resin according to any one of claims from 10 to 19, comprising one or more stabilizers in an amount in the range from 0.05 to 4 parts by weight per 100 parts by weight of halogen-containing polymer.

21. The halogenated resin according to any one of claims from 10 to 20, comprising as stabilizer one or more metal soaps in an amount in the range from 0.05 to 3 parts by weight, preferably from 0.1 to 1.0 parts by weight per 100 parts by weight of polymer.

22. The halogenated resin according to any one of claims from 10 to 20, comprising as stabilizer one or more organotin compounds in an amount in the range from 0.1 to 4 parts by weight, more preferably from 0.15 to 2.0 parts by weight per 100 parts by weight of polymer.

23. Use of a composition comprising:
a) disodium adipate, and
b) at least one compound selected from the group consisting of M(ClO4)k and (CF₃SO₃)ₙM wherein M is selected from the group consisting of H+, Li+, Na+, K+, Mg2+, Ca2+, Ba2+, Zn2+, Al³⁺ and NH4+ and k and n are 1, 2 or 3 depending on the valency of M;
for stabilizing halogen-containing polymers.

## Patentansprüche

1. Zusammensetzung zur Stabilisierung von halogenhaltigen Polymeren, Folgendes umfassend:
a) Dinatriumadipat und
b) mindestens eine Verbindung, ausgewählt aus der Gruppe bestehend aus M(ClO₄)k und (CF₃SO₃)ₙM, wobei M aus der Gruppe bestehend aus H⁺, Li⁺, Na⁺, K⁺, Mg²⁺, Ca²⁺, Ba²⁺, Zn²⁺, Al³⁺ und NH₄⁺ ausgewählt ist und k und n in Abhängigkeit von der Wertigkeit von M 1, 2 oder 3 sind, und
wobei b) nicht Bariumperchlorat ist.

2. Zusammensetzung gemäß Anspruch 1, wobei M der mindestens einen Verbindung ausgewählt aus der Gruppe bestehend aus M(ClO₄)k und (CF₃SO₃)ₙM aus der Gruppe bestehend aus Li⁺, Na⁺, K⁺, Mg²⁺, Ca²⁺ und Zn²⁺ ausgewählt ist.

3. Zusammensetzung gemäß Anspruch 2, wobei M der mindestens einen Verbindung ausgewählt aus der Gruppe bestehend aus M(ClO₄)k und (CF₃SO₃)ₙM aus der Gruppe bestehend aus Na⁺, K⁺ und Ca²⁺ ausgewählt ist.

4. Zusammensetzung gemäß Anspruch 3, wobei M der mindestens einen Verbindung ausgewählt aus der Gruppe bestehend aus M(ClO₄)k und (CF₃SO₃)ₙM Natrium ist.

5. Zusammensetzung gemäß einem der Ansprüche 1 bis 4, wobei die mindestens eine Verbindung ausgewählt aus der Gruppe bestehend aus M(ClO₄)k und (CF₃SO₃)ₙM Perchlorsäure oder ein Perchloratsalz ist.

6. Zusammensetzung gemäß Anspruch 5, wobei die mindestens eine Verbindung ausgewählt aus der Gruppe bestehend aus M(ClO₄)k und (CF₃SO₃)ₙM Natriumperchlorat ist.

7. Zusammensetzung gemäß Anspruch 5, wobei die mindestens eine Verbindung ausgewählt aus der Gruppe bestehend aus M(ClO₄)k und (CF₃SO₃)ₙM ein Komplex von Natriumperchlorat mit Triethylenglykol, Butyldiglykol oder Polyethylenglykol ist.

8. Zusammensetzung gemäß einem der Ansprüche 1 bis 7, wobei die Zusammensetzung einen Stabilisator umfasst.

9. Zusammensetzung gemäß einem der Ansprüche 1 bis 8, wobei die Zusammensetzung Co-Stabilisatoren umfasst, ausgewählt aus der Gruppe bestehend aus Antioxidantien, organischen Co-Stabilisatoren (β-Diketone und Dihydropyridine oder Polydihydropyridine, Uracilderivate), Alkanolamine, Zeolithe und Hydrotalcite, Polyole, Alkali- und Erdalkalihydrate und -oxide und organische Phosphite.

10. Halogeniertes Harz in starrer Formulierung, umfassend ein halogenhaltiges Polymer und eine stabilisierende Zusammensetzung gemäß einem der Ansprüche 1 bis 9.

11. Halogeniertes Harz gemäß Anspruch 10, wobei das halogenhaltige Polymer Polyvinylchlorid (PVC) ist.

12. Halogeniertes Harz gemäß Anspruch 10, wobei das halogenhaltige Polymer chloriertes Polyvinylchlorid (C-PVC) ist.

13. Halogeniertes Harz in weichgemachter oder halbstarrer Formulierung, umfassend ein halogenhaltiges Polymer, eine weichmachende Substanz und eine stabilisierende Zusammensetzung gemäß einem der Ansprüche 1 bis 9.

14. Halogeniertes Harz gemäß Anspruch 13, wobei das halogenhaltige Polymer Polyvinylchlorid (PVC) ist.

15. Halogeniertes Harz gemäß einem der Ansprüche 10 bis 14, wobei das Harz Additive umfasst, ausgewählt aus der Gruppe bestehend aus Farbstoffen, Pigmenten, Flammschutzmitteln, internen oder/und externen Gleitmitteln, Schlagzähmodifikatoren, Prozesshilfsmitteln, Licht- und Ultraviolettstrahlungs-Stabilisatoren, fluoreszierenden Weißmachern, Füllstoffen, Geliermitteln, antistatischen Mitteln, Antibeschlagmitteln, Treibmitteln und anderen Additiven zur Verhinderung, Maskierung oder Verringerung der durch Erwärmung, Alterung und Lichteinwirkung verursachten Beeinträchtigung.

16. Halogeniertes Harz gemäß einem der Ansprüche 10 bis 15, wobei Dinatriumadipat in einer Menge im Bereich von 0,01 bis 5 Gew.-Teilen pro 100 Gew.-Teile des halogenhaltigen Polymers vorhanden ist.

17. Halogeniertes Harz gemäß Anspruch 16, wobei Dinatriumadipat in einer Menge im Bereich von 0,02 bis 2 Gew.-Teilen pro 100 Gew.-Teile des halogenhaltigen Polymers vorhanden ist.

18. Halogeniertes Harz gemäß einem der Ansprüche 10 bis 17, wobei Perchlorsäure oder ein Salz davon in einer Menge im Bereich von 0,001 bis 2 Gew.-Teilen pro 100 Gew.-Teile des Polymers vorhanden ist.

19. Halogeniertes Harz gemäß Anspruch 18, wobei Perchlorsäure oder ein Salz davon in einer Menge im Bereich von 0,005 bis 1 Gew.-Teilen pro 100 Gew.-Teile des Polymers vorhanden ist.

20. Halogeniertes Harz gemäß einem der Ansprüche 10 bis 19, umfassend einen oder mehrere Stabilisatoren in einer Menge im Bereich von 0,05 bis 4 Gew.-Teilen pro 100 Gew.-Teile des halogenhaltigen Polymers.

21. Halogeniertes Harz gemäß einem der Ansprüche 10 bis 20, umfassend als Stabilisator eine oder mehrere Metallseifen in einer Menge im Bereich von 0,05 bis 3 Gew.-Teilen, vorzugsweise von 0,01 bis 1,0 Gew.-Teilen pro 100 Gew.-Teile des Polymers.

22. Halogeniertes Harz gemäß einem der Ansprüche 10 bis 20, umfassend als Stabilisator eine oder mehrere Organozinnverbindungen in einer Menge im Bereich von 0,1 bis 4 Gew.-Teilen, bevorzugter von 0,15 bis 2,0 Gew.-Teilen pro 100 Gew.-Teile des Polymers.

23. Verwendung einer Zusammensetzung, Folgendes umfassend:
a) Dinatriumadipat und
b) mindestens eine Verbindung ausgewählt aus der Gruppe bestehend aus M(ClO4)k und (CF₃SO₃)ₙM, wobei M aus der Gruppe ausgewählt ist, bestehend aus H+, Li+, Na+, K+, Mg2+, Ca2+, Ba2+, Zn2+, Al3+ und NH4+ und k und n in Abhängigkeit von der Wertigkeit von M 1, 2 oder 3 sind;
zur Stabilisierung halogenhaltiger Polymere.

## Revendications

1. Composition pour stabiliser des polymères contenant de l'halogène comprenant :
a) de l'adipate disodique, et
b) au moins un composé sélectionné parmi le groupe constitué de M(ClO₄)k et (CF₃SO₃)ₙM, M étant sélectionné parmi le groupe constitué de H⁺, Li⁺, Na⁺, K⁺, Mg²⁺, Ca²⁺, Ba²⁺, Zn²⁺, Al³⁺ et NH₄⁺ et k et n sont égaux à 1, 2 ou 3 en fonction de la valence de M, et
dans laquelle b) n'est pas le perchlorate de baryum.

2. Composition selon la revendication 1, dans laquelle M de l'au moins un composé sélectionné parmi le groupe constitué de M(ClO₄)k et (CF₃SO₃)ₙM est sélectionné parmi le groupe constitué de Li⁺, Na⁺, K⁺, Mg²⁺, Ca²⁺ et Zn²⁺.

3. Composition selon la revendication 2, dans laquelle M de l'au moins un composé sélectionné parmi le groupe constitué de M(ClO₄)k et (CF₃SO₃)ₙM est sélectionné parmi le groupe constitué de Na⁺, K⁺ et Ca²⁺.

4. Composition selon la revendication 3, dans laquelle M de l'au moins un composé sélectionné parmi le groupe constitué de M(ClO₄)k et (CF₃SO₃)ₙM est le sodium.

5. Composition selon l'une quelconque des revendications 1 à 4, dans laquelle l'au moins un composé sélectionné parmi le groupe constitué de M(ClO₄)k et (CF₃SO₃)ₙM est l'acide perchlorique ou un sel de perchlorate.

6. Composition selon la revendication 5, dans laquelle l'au moins un composé sélectionné parmi le groupe constitué de M(ClO₄)k et (CF₃SO₃)ₙM est le perchlorate de sodium.

7. Composition selon la revendication 5, dans laquelle l'au moins un composé sélectionné parmi le groupe constitué de M(ClO₄)k et (CF₃SO₃)ₙM est un complexe de perchlorate de sodium avec le triéthylène glycol, le butyl diglycol ou le polyéthylène glycol.

8. Composition selon l'une quelconque des revendications 1 à 7, dans laquelle la composition comprend un stabilisant.

9. Composition selon l'une quelconque des revendications 1 à 8, dans laquelle la composition comprend des co-stabilisants sélectionnés parmi le groupe constitué d'antioxydants, de co-stabilisants organiques (β-dicétones et dihydropyridines ou polydihydropyridines, dérivés d'uracile), d'alcanolamines, de zéolithes et d'hydrotalcites, de polyols, d'hydrates et oxydes de métaux alcalins et alcalino-terreux et de phosphites organiques.

10. Résine halogénée en formulation rigide comprenant un polymère contenant de l'halogène et une composition stabilisante selon l'une quelconque des revendications 1 à 9.

11. Résine halogénée selon la revendication 10, dans laquelle le polymère contenant de l'halogène est le poly(chlorure de vinyle) (PVC).

12. Résine halogénée selon la revendication 10, dans laquelle le polymère contenant de l'halogène est le poly(chlorure de vinyle) chloré (C-PVC).

13. Résine halogénée en formulation plastifiée ou semi-rigide comprenant un polymère contenant de l'halogène, une substance plastifiante et une composition stabilisante selon l'une quelconque des revendications 1 à 9.

14. Résine halogénée selon la revendication 13, dans laquelle le polymère contenant de l'halogène est le poly(chlorure de vinyle) (PVC).

15. Résine halogénée selon l'une quelconque des revendications 10 à 14, dans laquelle la résine comprend des additifs sélectionnés parmi le groupe constitué de colorants, de pigments, d'agents ignifuges, de lubrifiants internes ou/et externes, de modificateurs d'impact, d'adjuvants de traitement, de stabilisants aux rayonnements lumineux et ultraviolets, d'agents de blanchiment fluorescents, de charges, d'agents gélifiants, d'agents antistatiques, d'agents anti-condensation, d'expanseurs et d'autres additifs pour prévenir, masquer ou réduire une détérioration provoquée par un chauffage, un vieillissement et une exposition à la lumière.

16. Résine halogénée selon l'une quelconque des revendications 10 à 15, dans laquelle l'adipate disodique est présent dans une quantité dans la plage de 0,01 à 5 parties en poids pour 100 parties en poids du polymère contenant de l'halogène.

17. Résine halogénée selon la revendication 16, dans laquelle l'adipate disodique est présent dans une quantité dans la plage de 0,02 à 2 parties en poids pour 100 parties en poids du polymère contenant de l'halogène.

18. Résine halogénée selon l'une quelconque des revendications 10 à 17, dans laquelle l'acide perchlorique ou un sel de celui-ci est présent dans une quantité dans la plage de 0,001 à 2 parties en poids pour 100 parties en poids de polymère.

19. Résine halogénée selon la revendication 18, dans laquelle l'acide perchlorique ou un sel de celui-ci est présent dans une quantité dans la plage de 0,005 à 1 partie en poids pour 100 parties en poids de polymère.

20. Résine halogénée selon l'une quelconque des revendications 10 à 19, comprenant un ou plusieurs stabilisants dans une quantité dans la plage de 0,05 à 4 parties en poids pour 100 parties en poids de polymère contenant de l'halogène.

21. Résine halogénée selon l'une quelconque des revendications 10 à 20, comprenant, en tant que stabilisant, un ou plusieurs savons métalliques dans une quantité dans la plage de 0,05 à 3 parties en poids, de préférence de 0,01 à 1,0 partie en poids, pour 100 parties en poids de polymère.

22. Résine halogénée selon l'une quelconque des revendications 10 à 20, comprenant, en tant que stabilisant, un ou plusieurs composés d'organoétain dans une quantité dans la plage de 0,1 à 4 parties en poids, plus préférentiellement de 0,15 à 2,0 parties en poids, pour 100 parties en poids de polymère.

23. Utilisation d'une composition comprenant :
a) de l'adipate disodique, et
b) au moins un composé sélectionné parmi le groupe constitué de M(ClO4)k et (CF₃SO₃)ₙM, M étant sélectionné parmi le groupe constitué de H+, Li+, Na+, K+, Mg2+, Ca2+, Ba2+, Zn2+, Al3+ et NH4+ et k et n sont égaux à 1, 2 ou 3 en fonction de la valence de M ;
pour stabiliser des polymères contenant de l'halogène.
